# EUROPEAN PATENT SPECIFICATION

(11) **EP 3 651 468 B1**
(45) Date of publication and mention of the grant of the patent: **02.08.2023**
(21) Application number: 19207966.3
(22) Date of filing: 08.11.2019
(51) Int. Cl.: H04N 21/231, H04N 21/433, H04N 21/426, H04N 21/434, H04N 21/4408, H04N 21/61, H04N 21/6543

(54) **METHOD OF DELIVERING MEDIA CONTENT, AND SERVICE SYSTEM FOR IMPLEMENTATION OF SAID METHOD**
VERFAHREN ZUR BEREITSTELLUNG VON MEDIENINHALTEN UND SERVICESYSTEM ZUR IMPLEMENTIERUNG DIESES VERFAHRENS
PROCÉDÉ DE DISTRIBUTION DE CONTENU MULTIMÉDIA ET SYSTÈME POUR LA MISE EN UVRE DUDIT PROCÉDÉ

(30) Priority: 09.11.2018 RU 2018139560
(43) Date of publication of application: 13.05.2020
(73) Proprietor: Cifra LLC, 194044 Saint-Petersburg (RU)
(72) Inventor: KRAVCHENKO, Vadim Viktorovich, 195197 Saint-Petersburg (RU); ZAVADOVSKIJ, Yan Andreevich, 196140 Saint-Petersburg (RU)
(74) Representative: Viering, Jentschura & Partner mbB Patent- und Rechtsanwälte

(56) References cited:
- EP-A1- 1 187 477
- EP-A2- 0 836 320
- ALEXANDER ADOLF: "EN 301192 - DVB-DATA Data Broadcast Specification - En301192v171 - rev 031 - Data Broadcast Specification", DVB, DIGITAL VIDEO BROADCASTING, C/O EBU - 17A ANCIENNE ROUTE - CH-1218 GRAND SACONNEX, GENEVA - SWITZERLAND , no. r18 7 June 2016 (2016-06-07), XP017851664, Retrieved from the Internet: URL:https://www.dvb.org/resources/restrict ed/members/documents/TM/TM1827r18_EN-30119 2---DVB-DATA-Data-Broadcast-Specification. zip En301192v171 - rev 031 - Data Broadcast Specification.docx [retrieved on 2016-06-07]
- INTERNATIONAL ELECTROTECHNICAL COMMISSION: "DIGITAL TERRESTRIAL TELEVISION RECEIVERS FOR THE DVB-T SYSTEM", INTERNET CITATION, 1 January 2001 (2001-01-01), XP002399714, Retrieved from the Internet: URL:http://www.tv-platform.de/download/DVB -T/MinAnfo/A1_E-Book2-02.pdf [retrieved on 2006-09-13]

## Description

### Field of the invention

The group of inventions relates to technologies for satellite digital broadcasting, particularly, for delivering media content to end user without user's feedback channel.

### Background and prior art

EP 0 836 320 A2 discloses a service system and a method for media content delivery to end user without a user's feedback channel (i.e. only broadcast), comprising an electronic program guide server, a multiplexor that is configured with the possibility for creating a transport stream, and one-way transmission of the transport stream to input of client device, and a client device provided with at least one tuner connected to a satellite antenna converter, user interface module and data processing module, wherein the data processing module of client device is configured with the possibility of: detection of the service metadata file in the transport stream; comparison of version of the detected service metadata with the version earlier saved in the memory, if the memory of client device contains a saved version of service metadata file, and processing the service metadata file whose version is higher than the earlier saved version; processing the detected service metadata file and its saving to the memory of client device, if memory of client device does not contain a saved version of service metadata file; displaying by the user interface module for the end user in proper categories a list of saved media content.

Further suchlike service systems and methods are known from each of EP 1 187 477 A1, "EN 301192 - DVB-DATA Data Broadcast Specification - En301192v171 - rev 031 - Data Broadcast Specification" by Alexander Adolf, and "DIGITAL
TERRESTRIAL TELEVISION RECEIVERS FOR THE DVB-T SYSTEM" by the International Electronical Commission,
wherein EP 1 187 477 A1 further discloses encrypting content by personalized hardware key of particular client device,
wherein "EN 301192 - DVB-DATA Data Broadcast Specification - En301192v171 - rev 031 - Data Broadcast Specification" by Alexander Adolf further discloses the application of a linkage descriptor, and wherein
TERRESTRIAL TELEVISION RECEIVERS FOR THE DVB-T SYSTEM" by the International Electronical Commission further discloses the use of version for metadata.

From prior art a system and method are known for client-side recommendations on one-way broadcast networks disclosed in US 2015/0089524A1, cl.H04N 21/442. Components of this system and steps of delivering media content performed by this system are characterized by that they include at least a one-way channel connecting a broadcasting station (TV station) to a set-top-box device of a first set of users, the set-top-box including a memory, a computation and driving unit for tracking the user activity, storing a user profile, generating and displaying a ranking of recommended media items, the ranking being determined by the computation unit through a recommender model stored on the memory. The system further includes a collaborative dual module, a first back-end module running on an auxiliary server connected to a two-way network and belonging to an auxiliary domain, this first back-end module leveraging external data sources to collect community-based information on at least part of the media items, while the recommender model stored on the memory being a second front-end module, wherein the broadcasting station and the set-top-box device belong to a target domain.

However, the known method of delivering media content and system for its embodiment have a number of drawbacks including lack of any prevention of recorded content from playback on other devices, which in turn results in unavailability of required protection of rights of the owner of the content, as well as low service availability, as in the known system only broad band Internet is envisaged, while the most geographic positions have no access to broad band Internet.

### Summary of the invention

The object of the claimed group of inventions is avoiding the above drawbacks.

Technical result comprises protection of recorded content against playback on other devices while ensuring service of delivery of media content to end user without user's feedback channel.

Said technical result is achieved by a service system for media content delivery to end user without a user's feedback channel, according to independent claim 1, and a corresponding method according to independent claim 11. Dependent claims 2-10 show further possible embodiments of a suchlike service system, wherein dependent claims 12-27 show further embodiments of the method.

According to the present invention, a service system for media content delivery to end user without a user's feedback channel comprises: an electronic program guide server is configured with the possibility for creating a service metadata file forming a metadata selection of service TV programs, comprising a predefined set of information parameters including at least a version of metadata file, and for sending said service metadata file to input of multiplexor; a multiplexor is configured with the possibility for creating a transport stream, and one-way transmission of the transport stream to input of client device; said transport stream being created from said service metadata and media content coming to input of multiplexor from broadcasting Operator, as well as from additional service information that is a Linkage descriptor which allows dynamic detection by client device of said service metadata in the transport stream; a client device provided with at least one tuner connected to a satellite antenna converter, user interface module and data processing module, implemented in a soft hardware manner, and configured with the possibility for receiving the transport stream without a user's feedback channel, and for transport stream processing, wherein processing includes detection via Linkage descriptor of said service metadata file in the transport stream, and saving media content on the basis of saved service metadata, and its encrypting by personalized hardware key of particular client device.

The Linkage descriptor comprises at least the broadcasting parameters (SNT) of service metadata file, a identifier (signature) of the media content delivery service, and information about version of the service metadata format.

With this, the data processing module of client device is configured with the possibility of:
- detection of the service metadata file in the transport stream;
- comparison of version of the detected service metadata file with the version earlier saved in the memory, if the memory of client device contains a saved version of service metadata file, and processing the service metadata file whose version is higher than the earlier saved version;
- processing the detected service metadata file and its saving to the memory of client device, if memory of client device does not contain a saved version of service metadata file;
- displaying by the user interface module for the end user in proper categories a list of saved media content with possibility of its further decrypting and viewing.

Further, the transport stream may be a MPEG-2 transport stream and/or MPEG-4 transport stream.

Further, media content saving is performed on the basis of forming and saving timers for channel recording in the client device memory.

Further, timers for channel recording are formed for the channels whose SNT parameters are present both in the set of channels of broadcasting Operator in client device memory, and in the service metadata file being processed.

Further, service metadata is a file in JSON format, and additionally contains information about TV programs, list of categories used within the service of media content delivery to end user.

Further, service metadata file includes information parameters of selection by broadcasting Operator of programs for their forced recording by client device.

Further, information parameters of selection by broadcasting Operator of programs for their forced recording by client device are formed as a result of analysis of user's consumption of media content.

Further, transmission of transport stream from electronic program guide server to client device is accomplished by satellite broadcasting.

Further, the client device is a digital set-top box (STB) and/or a computing device.

Further, the electronic program guide server is an EPG-server.

The claimed technical result is also achieved by a method for media content delivery to end user without a user's feedback channel, comprising sequentially performed steps of: forming service metadata file, comprising a predefined set of information parameters including at least a version of service metadata file, on an electronic program guide server of transmitting side, and sending said service metadata file to input of multiplexor; forming a transport stream without user's feedback channel with the help of multiplexer by way of building into the media content transport stream, coming to the input from the broadcasting Operator, of TV program metadata, service metadata file and additional service information that is a Linkage descriptor in network information table NIT ensuring dynamic detection by client device of said service metadata in the transport stream, and sending the formed transport stream without user's feedback channel to the input of client device; receiving the transport stream without user's feedback channel on the client device provided with at least one tuner connected to a satellite antenna converter, and processing the transport stream during which perform at least: detecting service metadata file in the transport stream by means of Linkage descriptor; saving service media content onto storage device of client device on the basis of saved service metadata, and its encrypting by personalized hardware key of particular client device.

In one of possible embodiments of the claimed technical solution, at the step of detection of service metadata file in transport stream the method additionally comprises: checking presence of a version of service metadata file saved in client device memory; in case of presence of a version of service metadata file saved in client device memory - comparing the version of the detected service metadata file with the earlier saved version; and processing the service metadata file whose version is higher than the earlier saved version, or the currently found service metadata file, if client device memory does not contain a version of service metadata file.

Further, a list of saved media content in proper categories with possibility of its further decrypting and viewing is displayed by the user interface module for the end user.

Further, the service metadata file is built into transport stream, said transport stream being a MPEG-2 transport stream and/or MPEG-4 transport stream.

Further, service metadata file transmission is carried out by data carousel method.

Further, saving service media content is performed on the basis of forming and saving timers for channel recording in client device memory.

Further, timers for channel recording are formed for the channels whose SNT parameters are present both in the set of channels of broadcasting Operator in client device memory, and in the service metadata file being processed.

With this, said timers for channel recording are preferably formed for the channels whose SNT parameters are present both in the set of channels of broadcasting Operator in client device memory, and in the service metadata file being processed, as well as for channels which are not displayed in the list of channels for user, but saved in client device memory as a result of search of broadcasting Operator channels, the settings for displaying channels in the list being determined at the transmitting side by VSF parameter in LCN.

Further, with any embodiment of the claimed method, check of channel parameters (SNT) and time of beginning for each TV program specified in service metadata file is accomplished, and timer for channel recording is saved for programs whose time of beginning in service metadata file is less than the accurate time of client device. With this, during processing a new version of service metadata, new list of timers for recording is formed while the previous list is deleted.

Further, information about version of service metadata file is deleted upon client device powerdown and/or upon re-search of Operator channels.

Further, recording programs of channels not displayed in channel list for user, but saved in client device memory as a result of search of Operator channels is accomplished during saving service media content.

With this, in one of possible embodiments of the claimed technical solution, settings for displaying channels in the list of saved media content is determined at the transmitting side by VSF parameter in LCN.

Further, service metadata is formed as a file in JSON format, and additionally information about TV programs and list of categories used within the service of media content delivery to end user is included in service metadata.

Further, information parameters of choosing the programs by broadcasting Operator for their forced recording by client device is included in service metadata file.

Further, there is performed a selection of information parameters of choosing the programs by broadcasting Operator for their forced recording by client device as a result of analysis of media content consumption by user.

Further, transmission of transport stream from EPG server to client device is accomplished by satellite broadcasting.

Further, a digital TV accessory STB and/or a computing device is used as a client device.

Obviously, both the above general description, and following detailed description are provided solely as an example and for explanation, and not for limiting the claimed group of inventions.

### Brief description of the drawings

Fig. 1 shows a general schematic of service system for delivering media content to end user without user's feedback channel.
Fig. 2 is a flow chart of procedure for detection of service metadata file.
Fig 3 is a flow chart of procedure for service metadata file processing.
Fig. 4 is a flow chart of procedure for recording and checks being performed during program recording.

### Detailed description of preferred embodiments of the invention

Further goes a list of terms used in the description of this invention:
JSON (JavaScript Object Notation) - text data interchange format.
LCN (Logical Channel Numbers) - descriptor determining logical channel numbering.
MPEG-2 / MPEG-4 - transport stream - a format of transmitting and storing video, audio and other data used in satellite digital broadcasting systems; structure of the transport stream is defined in ISO/IEC 13818-1 standard (see ISO/IEC 13818-1 (2000): "Information technology; Generic coding of moving pictures and associated audio information: Systems").
NIT (Network Information Table) - a table of network information of transport stream.
NTP (Network Time Protocol) - a protocol of synchronization of user's computer system time with server system time.
SNT (Service ID, Original Network ID, Transport Stream ID) - unique IDs of parameters determining service (channel) in transport stream.
Standby - wait mode of STB with turning-off audio/video outputs.
STB (set-top box) - client device - receiver of satellite digital television allowing access to digital TV and corresponding digital TV services.
VSF (Visible Service Flag) - flag set for each channel in LCN descriptor, determining if the channel be displayed in the channel list.
Category, as used in this document - title of the list wherein recording will be displayed in user interface module; this parameter is mandatory for all TV programs that operator selects for recording within the framework of service operation.
Content - TV broadcasting content which is continuously received by user from operator of satellite television service.
Operator - operator of TV broadcasting, satellite television service provider.

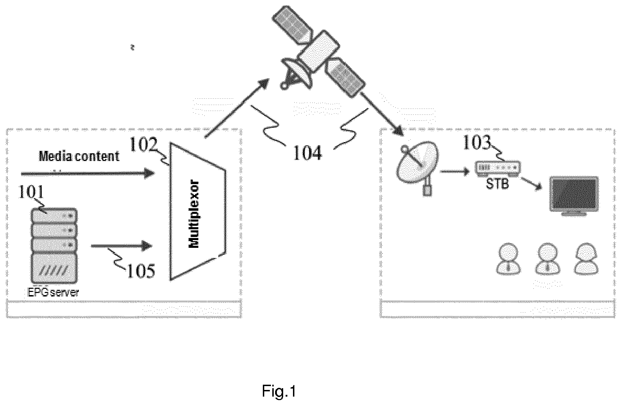

Further, with reference to Fig. 1, there will be described operation of a system of service for providing media content to end user without user's feedback channel. The system includes an electronic TV program guide server 101 of transmitting side, a multiplexor 102, and a client device 103

In example embodiment of Fig.1, server 101 is an electronic program guide (EPG) server responsible for formation and transmission of electronic program guide particularly service metadata file for allowing service operation for delivery of media content to end user. On EPG server a category reference guide is created comprising a title of category, and a distinctive label of special content. For special content in the user interface module a special poster is displayed; for the other content a frame from the record is used as a poster. For example, "for adults only" content may be defined as a special content, therefore a stopper-poster "18+" or another static poster chosen by Operator may be used for this special content. Category reference guide is created, stored, and edited solely on server 101. Using EPG server allows effective and flexible service control, without need of employing additional technical means for its embodiment, as well as ensures, in conjunction with the other components of service system, according to the technical solution of the present invention - implementation of delivery of media content to end user without user's feedback channel.

Selection of programs which may be later recorded on client device, as shown in diagrams of Fig. 1-4 of the example of embodiment of the claimed group of inventions, initially is formed by Operator based on analysis of content utilization by a user or a group of users. At that, content selection by Operator may be carried out both by direct specification of programs, and in automatic mode as a result of content selection according to the operator-prescribed data parameters for searching corresponding metadata, and thus formation of content selection for implementation of service. In accordance with the operator-provided selection, the editor of server 101, using web-interface, in the description of respective program puts a label of forced entry of event, and a category that the program relates to. The programs having the label of forced entry are later added to service metadata file 105.

In the above example of embodiment, said service metadata file is a file in JSON format comprising information on programs, list of categories used within the service, and version of service metadata file itself. Service metadata file version comprises the following components: major version (version of service metadata format), minor version, file build version. Information about programs, along with standard set of attributes, includes also parameters of channel that transports the program, and the category that the program belongs to. The choice of JSON format for formation of service metadata file is preferable, however the technical solution of the present invention may be embodied using other formats allowing service metadata file formation in similar manner.

Service metadata file is delivered to client device by MPEG-2 or MPEG-4 transport stream 104 (ISO/IEC 13818-1 standard). For transmission of service metadata file a data carousels method (Data Carousels, ETSI EN 301 192) is used. Possibility of building a service metadata file into transport stream of MPEG-2 or MPEG-4 format significantly simplifies and expedites both the process of formation of media content transport stream including service metadata file, and its transmission and further processing on the end, client device, without need of installing and using additional soft hardware for its embodiment, and allowing implementation of service on client device using standard means of transport stream processing without user's feedback channel. However, to form a transport stream comprising a service metadata file, there may be used other known standards allowing embodiment of technical solution of the present invention.

Tuning of MPEG-2 or MPEG-4 transport stream by multiplexing device is carried out manually by Operator engineers, or by using other known in the prior art methods of automatic tuning according to preset parameters. Data formed at EPG server is transmitted to the "input" of multiplexing device, whereby said data is built into common MPEG-2 or MPEG-4 transport stream, as well as additional service information is added in the form of linkage descriptor in the table of network information NIT (Network Information Table, see ETSI EN 300468). Linkage descriptor in this case is used for dynamic detection of service metadata file in transport stream by client device in mode which is not under control of end user. With this, among the additional service information contained in Linkage descriptor, there are service metadata file broadcasting parameters (SNT), service identifier, and service metadata format version.

Among manually set and available for editing parameters in Linkage descriptor are the following:
- Transport Stream ID, Original Network ID, Service ID - broadcasting parameters of service metadata file (SNT).
- Data Bytes - row of hexadecimal data comprising:
   - signature - service identifier (used directly for descriptor - to service comparison),
   - json_format_version - service metadata file format version (for possibility of service update without back matching).

Processing of the formed MPEG-2 or MPEG-4 transport stream transmitted from "output" of the multiplexing device is performed by the client device. Client device is preferably a satellite digital set-top box (STB) whose software contains tools for service metadata file processing, content recording into the user interface module to display the results of service operation. In the following description "service operation" means a variety of functions performed on STB: detecting, loading and processing service metadata file, as well as recording audio and video content of the service. This embodiment is the most effective in implementation of satellite digital broadcasting, ensuring realization of the service and method of media content delivery according to technical solution of the present invention, as the result of processing of transport stream using a soft hardware resource of client device without a need of providing a user feedback channel. Obviously, the client device may be embodied in the form of any other computing device used in the art that implements the method of media content delivery corresponding to the present invention.

Briefly, service operation on STB may be represented as follows:
1. Receiving service metadata file;
2. Forming a set of timers for recording the service content;
3. Recording the service content according to saved timers;
4. Displaying the records in the user interface module.

At that, the following conditions should be met for service operation:
1. For transmitting side - presence of necessary data in MPEG-2 or MPEG-4 transport stream:
   a) presence of service metadata file;
   b) presence of valid Linkage descriptor (descriptor is considered valid if its parameters are filled in correctly).
2. For client side:
   a) Search of Operator channels is fulfilled;
   b) Tuning allowing service operation in the user interface module of the client device (STB) is turned on;
   c) presence of available hardware resource;
   d) presence of appropriate storage device;
   e) STB operation in appropriate mode.

For service operation on STB search of Operator channels is necessarily performed. This requirement is necessary for detecting and processing the needed service information in MPEG-2 or MPEG-4 transport stream. For service operation, the appropriate tuning implemented in the user interface module must be activated. With this, the tuning allowing service operation does not affect preview capability of content recorded earlier under service operation. Besides, for service operation on STB one of the requirements is presence of vacant hardware resource - a tuner. Tuner may be considered vacant when its resource is not used by a function of STB having greater priority than the present service. Depending on number of tuners, STBs wherein the service is implemented, are divided into two types: single-tuner type and multi-tuner type (STBs having two or more tuners). For multi-tuner STB, a primary tuner is a tuner used directly by this STB; a supplementary tuner is a tuner used by devices connected to this STB (for example by an additional accessory or playstation which is a client with respect to the multi-tuner STB). For service operation any of tuners may be utilized.

Besides presence of vacant hardware resource, service operation requires fulfilment of STB operation mode condition depending on STB design version. Service operation on single-tuner or multi-tuner STB with using the primary tuner is carried out in following operational modes:
1. Standby mode;
2. Identifying the subscriber in the service user interface module;
3. Mode of preview of channels (when parameters of the channel being previewed and the channel being recorded coincide).

Service operation on multi-tuner STB with using a supplementary tuner does not depend on STB operational mode.

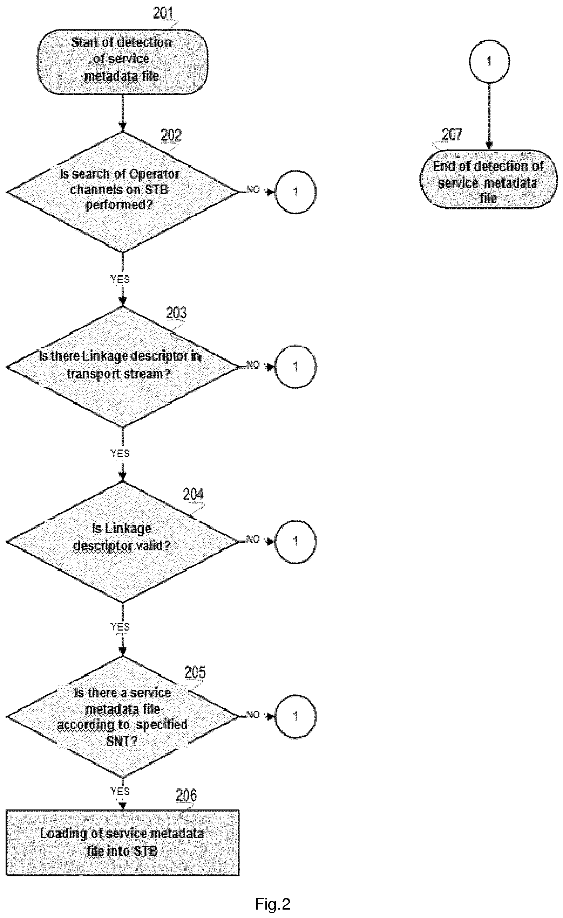

Detection of service metadata file is accomplished by processing of the appropriate table in the incoming transport stream (NIT) with detection of Linkage descriptor. Steps of detection of service metadata file performed sequentially are shown in Fig. 2 with description, where:
Step 201 - start of procedure of detection of service metadata file.
Step 202 - check if search of Operator channels is fulfilled.
Step 203 - check if Linkage descriptor is present in the transport stream.
Step 204 - check if Linkage descriptor is valid.
Step 205 - check if service metadata file is present according to specified SNT parameters.

In case if (at any of the above steps): service metadata file is not detected (step 201), search of Operator channels is not fulfilled (step 202), Linkage descriptor is not detected in the transport stream (step 203), Linkage descriptor is not valid (step 204), service metadata file is not present according to specified SNT parameters (step 205), then the procedure of detection of service metadata file ends (step 207) (where 1 denotes a connecting line of transition to step 207).

Service metadata file is loaded into STB (Step 206, Fig. 2) only if other steps (201-205) are fulfilled successfully, including detection of service metadata file, search of Operator channels, detection of Linkage descriptor in the transport stream, validation of Linkage descriptor, and confirmation of service metadata file presence according to specified SNT parameters.

Upon detection of service metadata file on STB, check of its version is accomplished. Initially validation of minor and major file versions is performed: if their values are not valid (differ from the required ones) - the service metadata file is not processed. Further validation of service metadata file build version is accomplished. If the service metadata file was not received earlier (i.e. STB memory has no saved information about version of the file), or the value of the version of the received file is greater than recently saved version, then the new version is saved with further forming of list of timers. Otherwise, if the version of the received file is lower than recently saved one, then processing of service metadata file is not accomplished.

Removal of information about service metadata file version is performed upon STB power supply switching-off, and upon re-search of Operator channels. Removal of information about service metadata file is accomplished to maintain actuality of service metadata, as after searching the channel set may be changed.

On the basis of service metadata file, there is formed a list of timers for recording audio and video content (media content) of the service. List of timers is not displayed in the user interface module, and therefore it is not available for the user to edit. During formation of list of timers for recording, comparison is carried out of parameters of channels (SNT) specified in service metadata file with the parameters of channels saved in STB memory as a result of search of Operator channels. Timer for recording will be saved in STB memory only for the channels that present in STB memory. For recording there may be used channels which are not displayed in the list of channels for the user, but saved in STB memory as a result of search of Operator channels, i.e. the channels to which the user is unable to switchover. Thus, content recorded from the channels which are not displayed for the user may be considered exclusive. Setting-up of channel display in the list is determined at the transmitting side by VSF parameter in LCN. During saving timers for recording into STB memory within service operation, the parameters of program from service metadata file, which later will be displayed in the user interface module are saved as recording attributes. With processing a new version of service metadata, a new list of timers for recording is formed, while the previous list is removed.

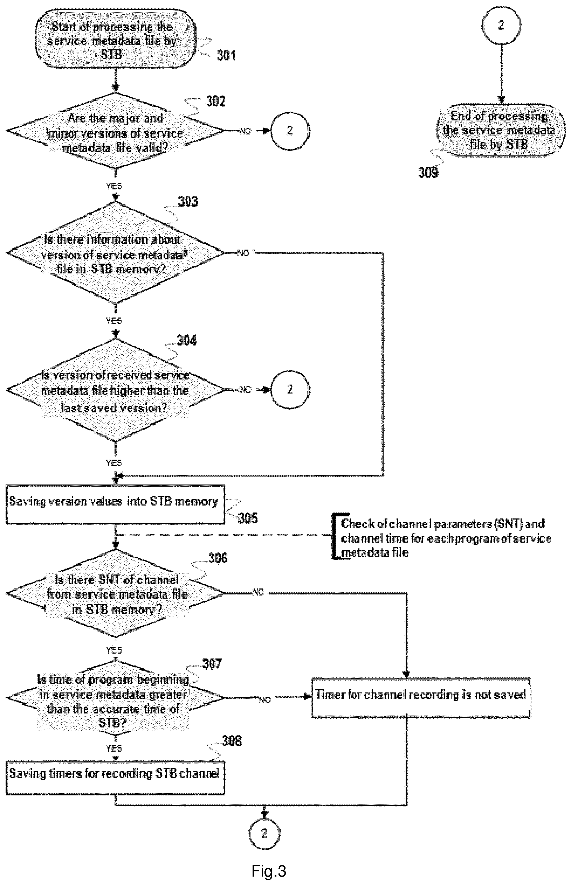

Further, with reference to Fig. 3, the steps of processing of service metadata file will be described. Step 301 is a start of procedure of STB service metadata file processing. Step 302 comprises validation check of the major and minor version of service metadata file. If said versions are not valid, the procedure of STB service metadata file processing ends at step 309 (where 2 denotes a connecting line of transition to step 309). Step 303 comprises check of presence of any version of service metadata file in STB memory. If no version of service metadata file is found, the procedure transitions to step 305. Step 304 comprises check of version of the received service metadata file. If version of the fresh service metadata file is greater than the version of similar service metadata file found in STB memory, then procedure transitions to step 305. If version of the fresh service metadata file is equal or less than the version of similar service metadata file found in STB memory, then the procedure of STB service metadata file processing ends at step 309. At step 305 the version of service metadata file is saved in STB memory. With this, check is performed at steps 306 and 307 for each program specified in service metadata file. Completion of processing procedure at steps 306 and 307 occurs with checking the last record in service metadata file. According to the present invention, at step 306 a check takes place of presence of channel SNT from service metadata file in STB memory. In case of absence of channel SNT from service metadata file in STB memory, then timer for channel recording is not saved, and the procedure of STB service metadata file processing ends (transition to step 309 along connecting line 2 Fig. 3). If channel SNT from service metadata file is present in STB memory, the procedure transitions to step 307 where comparison of a program start time in service metadata with the accurate time in STB occurs. If the program start time in service metadata is greater than the accurate time in STB, then timer for STB channel recording is saved (step 308), and the procedure of STB service metadata file processing ends (transition to step 309 along connecting line 2 Fig. 3). If the program start time in service metadata is equal or less than the accurate time in STB, then timer for channel recording is not saved, and the procedure of STB service metadata file processing ends (transition to step 309 along connecting line 2 Fig. 3).

List of timers for program recording created on the basis of service metadata file is removed from the memory upon turning off the STB power supply. Recording of audio-video content is accomplished by functions of PVR (Personal Video Recorder), where PVR is a digital TV service that allows recording any of broadcast programs, and playback as many times as you like at convenient time, as well as program removal. During service content recording on a storage device, it is encrypted by customized hardware key of particular STB.

Timer activation for program recording within service operation is accomplished according to the accurate time, information about the accurate time being present in STB. Time is considered accurate if it is obtained as a sum of transport stream time or NTP server time and time zone preset in STB settings. Upon the time of program beginning, recording of audio-video content starts without user's intervention, and without recording indication in the user interface module in STB. Recording ends upon program completion. Successfully completed record is displayed in the user interface module in appropriate category. Recordings performed with service operation are displayed solely in the user interface module.

Recording of programs within service operation is accomplished onto a suitable storage device, a suitable storage device being considered a built-in or external memory device having rated capacity of at least 64 GB, formatted in a file system supported by STB. Limitation of minimal storage device capacity is monitored at software level, and used to allow the user to record more programs. Limitation of minimal storage device capacity may be changed by Operator as necessary. File systems of storage device supported by STB include, for example, EXT4, NTFS, FAT32.

For continuous update of service content in STB a possibility of program re-recording is implemented. If there is no free space in the storage device, a new program may be recorded over the earliest record. Removal of records for content update is accomplished in the frame of service only.

Program recording may be interrupted due to a number of reasons: capture of tuner resource by a STB function having greater priority; removal of storage device whereon recording is performed; shutdown of service operation in the user interface module; STB powerdown. In any case, the interrupted record is not saved in the frame of service.

If during program recording the signal at antenna input is momentarily lost (not longer than for 5 minutes), the fragments which correspond to signal loss will not be present in the record. In case of long-time absence of signal at antenna input (longer than for 5 minutes), such record will not be saved.

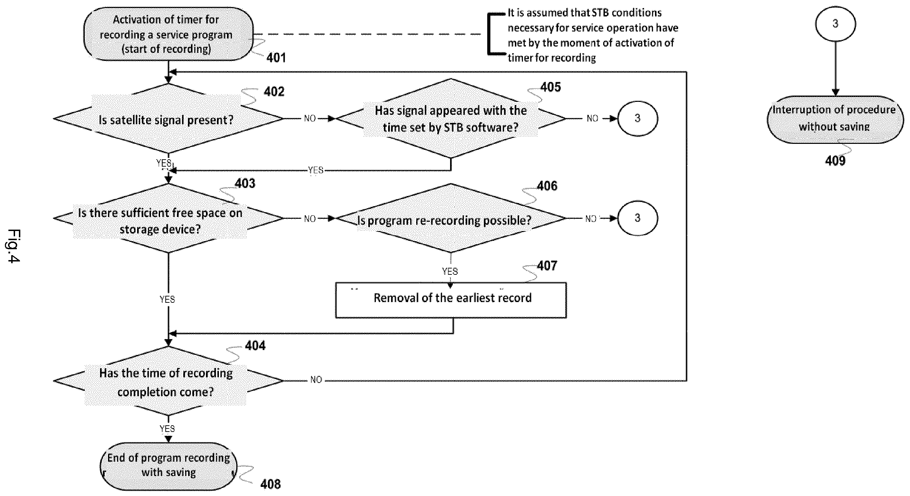

Further, with reference to Fig. 4, the steps of the procedures of recording and checking to be performed during recording the service content program will be described. At step 401 activation of timer for recording the program occurs, i.e. start of program recording takes place. At step 402 check of presence of satellite signal coming to STB occurs. If signal is absent, then STB software assigns a time interval, within which the signal should appear (not shown in Fig. 3). If signal does not appear within the assigned interval (when its presence is checked over the assigned period (step 405, Fig. 4)), then interruption 409 of recording process without saving occurs (where 3 denotes a connecting line of transition to step 409). In case of detection of satellite signal coming to STB (step 402), or its finding at step 405 within the assigned interval, the procedure proceeds to step 403 during whose performing there occurs a check of sufficient free space in the storage device for program recording. If free space is not enough then procedure checks (step 406) if it is possible to re-record the programs that have been already saved in said storage device. If said re-recording is not possible, then recording process is interrupted (409) without program saving. If said re-recording is possible, then the earliest recorded program is deleted (407), and the procedure proceeds to step 404. At step 404 procedure checks the time of the end of program recording. If said time has not come yet, procedure transitions to step 402. If said time has come, then program recording is completed with saving the program (408) in said storage device.

To record a program from a channel whose viewing requires presence of active service, a check of access permission for viewing such channel (service) is performed. Recording from a channel is not performed, if the appropriate service to view the channel in STB is not available. Presence of program record permission, used in operation of PVR functions in the frame of current service, is monitored solely by Operator during forming the selection in EPG server.

Protection of content against unauthorized distribution and playback on third-party devices is ensured by unique character of personalizing keys of each STB, i.e. decoding of content recorded on one STB is impossible on other devices including other STBs.

User interface module embodied to display the results of service operation provides for user:
1. Interface for navigation through the categories wherein records appear;
2. Capability of viewing information about the recorded program;
3. Capability of viewing a record and its removal.

Therefore, the set of features, characterizing the claimed group of inventions, ensures protection of recorded content against playback on other devices while providing a service of media content delivery to end user without a user's feedback channel.

## Claims

1. A service system for media content delivery to end user without a user's feedback channel, comprising:
- an electronic program guide server (101) is configured with the possibility for creating a service metadata file (105) forming a metadata selection of service TV programs, comprising a predefined set of information parameters including at least a version of metadata file, and for sending said service metadata file (105) to input of multiplexor (102);
- a multiplexor (102) is configured with the possibility for creating a transport stream (104), and one-way transmission of the transport stream (104) to input of client device (103);
- said transport stream (104) being created from said service metadata file (105) and media content coming to input of multiplexor (102) from broadcasting Operator, as well as from additional service information that is a Linkage descriptor which provides dynamic detection by client device (103) of said service metadata file (105) in the transport stream (104);
wherein the Linkage descriptor further comprises broadcasting parameters SNT of service metadata file (105), a identifier of the media content delivery service, and information about version of a service metadata format;
- a client device (103) provided with at least one tuner connected to a satellite antenna converter, user interface module and data processing module,
wherein the data processing module of client device (103) is configured with the possibility of:
- detection (301) of the service metadata file (105) in the transport stream (104);
- comparison (304) of version of the detected service metadata file (105) with the version earlier saved in the memory, if the memory of client device (103) contains a saved version of service metadata file (105), and processing (305) the service metadata file (105) whose version is higher than the earlier saved version;
- processing (305) the detected service metadata file (105) and its saving to the memory of client device (103), if memory of client device (103) does not contain a saved version of service metadata file (105);
- displaying by the user interface module for the end user in proper categories a list of saved media content with possibility of its further decrypting and viewing;
wherein the client device (103) is further implemented in a soft hardware manner, and configured with the possibility for receiving the transport stream (104) without a user's feedback channel, and for transport stream (104) processing, wherein processing includes detection via Linkage descriptor of said service metadata file (105) in the transport stream (104), and saving (308) media content on the basis of saved service metadata file (105), and its encrypting by personalized hardware key of particular client device (103).

2. The system of claim 1 wherein said transport stream (104) is a MPEG-2 transport stream and/or MPEG-4 transport stream.

3. The system of claim 1 wherein media content saving is performed on the basis of forming and saving timers for channel recording in the client device memory.

4. The system of claim 3 wherein the timers for channel recording are formed for the channels whose SNT parameters are present both in a set of channels of broadcasting Operator in client device memory, and in the service metadata file (105) being processed.

5. The system of claim 1 wherein service metadata file (105) is a file in JSON format, and additionally contains information about TV programs, list of categories used within the service of media content delivery to end user.

6. The system of claim 1 wherein said service metadata file (105) includes information parameters of selection by broadcasting Operator of programs for their forced recording by client device (103).

7. The system of claim 6 wherein said information parameters of selection by broadcasting Operator of programs for their forced recording by client device (103) are formed as a result of analysis of user's consumption of media content.

8. The system of claim 1 wherein transmission of transport stream (104) from electronic program guide server (101) to client device (103) is accomplished by satellite broadcasting.

9. The system of claim 1 wherein said client device (103) is a digital set-top box STB and/or a computing device.

10. The system of claim 1 wherein said electronic program guide server (101) is an EPG-server.

11. A method for media content delivery to end user without a user's feedback channel, comprising sequentially performed steps of:
- forming service metadata file (105), comprising a predefined set of information parameters including at least a version of service metadata file (105), on an electronic program guide server (101) of transmitting side, and sending said service metadata file (105) to input of multiplexor (102);
- forming a transport stream (104) without user's feedback channel with the help of multiplexer by way of building into the media content transport stream (104), coming to the input from the broadcasting Operator, of TV program metadata, service metadata file (105) and additional service information that is a Linkage descriptor in network information table NIT providing dynamic detection by client device (103) of said service metadata file (105) in the transport stream (104),
wherein the Linkage descriptor further comprises broadcasting parameters SNT of service metadata file (105), a identifier of the media content delivery service, and information about version of a service metadata format;
and sending the formed transport stream (104) without user's feedback channel to the input of client device (103);
- receiving the transport stream (104) without user's feedback channel on the client device (103) provided with at least one tuner connected to a satellite antenna converter, and processing the transport stream (104) during which perform at least:
- detecting (301) service metadata file (105) in the transport stream by means of Linkage descriptor;
wherein at the step of detection of service metadata file (105) in transport stream (104) the method additionally comprises:
- checking presence (303) of a version of service metadata file (105) saved in client device memory;
- in case of presence of a version of service metadata file (105) saved in client device memory, comparing (304) the version of the detected service metadata file (105) with the earlier saved version, and
- processing (305) the service metadata file (105) whose version is higher than the earlier saved version, or the currently found service metadata file, if client device memory does not contain a version of service metadata file (105);
and
- saving (308) service media content onto storage device of client device (103) on the basis of saved service metadata file (105), and its encrypting by personalized hardware key of particular client device (103).

12. The method of claim 11 wherein further comprises displaying by the user interface module for the end user in proper categories a list of saved media content with possibility of its further decrypting and viewing.

13. The method of claim 11 wherein the service metadata file (105) is built into transport stream (104), said transport stream (104) being a MPEG-2 transport stream and/or MPEG-4 transport stream.

14. The method of claim 11 wherein service metadata file (105) transmission is carried out by data carousel method.

15. The method of claim 11 wherein saving service media content is performed on the basis of forming and saving timers for channel recording in client device memory.

16. The method of claim 15 wherein said timers for channel recording are formed for the channels whose SNT parameters are present both in a set of channels of broadcasting Operator in client device memory, and in the service metadata file (105) being processed.

17. The method of claim 15 wherein said timers for channel recording are formed for the channels whose SNT parameters are present both in a set of channels of broadcasting Operator in client device memory, and in the service metadata file (105) being processed, as well as for channels which are not displayed in the list of channels for user, but saved in client device memory as a result of search of broadcasting Operator channels, the settings for displaying channels in the list being determined at the transmitting side by VSF parameter in LCN.

18. The method of any of claims 15-17 wherein check of channel parameters SNT and time of beginning for each TV program specified in service metadata file (105) is accomplished, and timer for channel recording is saved for programs whose time of beginning in service metadata file (105) is less than the accurate time of client device (103).

19. The method of claim 18 wherein during processing a new version of service metadata file (105), new list of timers for recording is formed while the previous list is deleted.

20. The method of any of claims 15-17, 19 wherein information about version of service metadata file (105) is deleted upon client device (103) power down and/or upon re-search of Operator channels.

21. The method of any of claims 15-17, 19 wherein recording programs of channels not displayed in channel list for user, but saved in client device memory as a result of search of Operator channels is accomplished during saving service media content.

22. The method of claim 21 wherein settings for displaying channels in the list of saved media content is determined at the transmitting side by VSF parameter in LCN.

23. The method of claim 11 wherein service metadata file (105) is formed as a file in JSON format, and additionally information about TV programs and list of categories used within the service of media content delivery to end user is included in service metadata file (105).

24. The method of claim 11 wherein information parameters of choosing the programs by broadcasting Operator for their forced recording by client device (103) is included in service metadata file (105).

25. The method of claim 24 wherein there is performed a selection of information parameters of choosing the programs by broadcasting Operator for their forced recording by client device (103) as a result of analysis of media content consumption by user.

26. The method of claim 11 wherein transmission of transport stream (104) from EPG server (101) to client device (103) is accomplished by satellite broadcasting.

27. The method of claim 11 wherein a digital TV accessory STB and/or a computing device is used as a client device (103).

## Patentansprüche

1. Dienstsystem zum Bereitstellen von Medieninhalt an einen Endnutzer ohne einen Feedbackkanal des Benutzers, aufweisend:
- ein Elektronischer-Programmführer-Server (101) ist konfiguriert mit der Möglichkeit zum Erzeugen einer Dienst-Metadatendatei (105), die eine Metadatenauswahl von Dienst-TV-Programmen bildet, aufweisend einen vordefinierten Satz von Informationsparametern, aufweisend mindestens eine Version der Metadatendatei, und zum Senden der Dienst-Metadatendatei (105) an den Eingang eines Multiplexers (102);
- ein Multiplexer (102) ist konfiguriert mit der Möglichkeit zum Erzeugen eines Transportstroms (104) und zur Einweg-Übertragung des Transportstroms (104) an den Eingang einer Client-Vorrichtung (103);
- wobei der Transportstrom (104) erzeugt wird aus der Dienst-Metadatendatei (105) und dem Medieninhalt, die von dem Rundsendebetreiber an den Eingang des Multiplexers (102) gelangen, sowie aus zusätzlichen Dienstinformationen, die ein Verknüpfungsdeskriptor sind, der eine dynamische Detektion der Dienst-Metadatendatei (105) im Transportstrom (104) durch die Client-Vorrichtung (103) bereitstellt;
wobei der Verknüpfungsdeskriptor ferner Rundsendeparameter SNT der Dienst-Metadatendatei (105), einen Identifikator des Medieninhaltbereitstellungsdienstes und Informationen über die Version eines Dienst-Metadatenformats aufweist;
- eine Client-Vorrichtung (103), die mit mindestens einem Tuner, der mit einem Satellitenantennenkonverter verbunden ist, einem Benutzerschnittstellenmodul und einem Datenverarbeitungsmodul bereitgestellt ist,
wobei das Datenverarbeitungsmodul der Client-Vorrichtung (103) konfiguriert ist mit der Möglichkeit zum:
- Detektieren (301) der Dienst-Metadatendatei im (105) Transportstrom (104);
- Vergleichen (304) der Version der detektierten Dienst-Metadatendatei (105) mit der früher im Speicher gespeicherten Version, wenn der Speicher der Client-Vorrichtung (103) eine gespeicherte Version der Dienst-Metadatendatei (105) enthält, und Verarbeiten (305) der Dienst-Metadatendatei (105), deren Version höher als die früher gespeicherte Version ist;
- Verarbeiten (305) der detektierten Dienst-Metadatendatei (105) und deren Speichern im Speicher der Client-Vorrichtung (103), wenn der Speicher der Client-Vorrichtung (103) keine gespeicherte Version der Dienst-Metadatendatei enthält (105);
- Anzeigen einer Liste mit gespeicherten Medieninhalten durch das Benutzerschnittstellenmodul für den Endnutzer in geeigneten Kategorien mit der Möglichkeit ihrer weiteren Entschlüsselung und Betrachtung;
wobei die Client-Vorrichtung (103) ferner in einer Soft-Hardware-Weise implementiert ist und mit der Möglichkeit zum Empfangen des Transportstroms (104) ohne einen Feedbackkanal des Benutzers und zur Transportstrom- (104) -verarbeitung konfiguriert ist, wobei die Verarbeitung die Detektion der Dienst-Metadatendatei (105) im Transportstrom (104) über den Verknüpfungsdeskriptor und das Speichern (308) des Medieninhalts auf der Grundlage der gespeicherten Dienst-Metadatendatei (105) und die Verschlüsselung davon durch einen personalisierten Hardwareschlüssel der bestimmten Client-Vorrichtung (103) aufweist.

2. System gemäß Anspruch 1, wobei der Transportstrom (104) ein MPEG-2-Transportstrom und/oder ein MPEG-4-Transportstrom ist.

3. System gemäß Anspruch 1, wobei das Speichern von Medieninhalt auf der Grundlage des Bildens und Speicherns von Timern für die Kanalaufzeichnung im Speicher der Client-Vorrichtung durchgeführt wird.

4. System gemäß Anspruch 3, wobei die Timer für die Kanalaufzeichnung für die Kanäle gebildet werden, deren SNT-Parameter sowohl in einem Satz von Kanälen des Rundsendebetreibers im Speicher der Client-Vorrichtung als auch in der verarbeiteten Dienst-Metadatendatei (105) vorhanden sind.

5. System gemäß Anspruch 1, wobei die Dienst-Metadatendatei (105) eine Datei im JSON-Format ist und zusätzlich Informationen über TV-Programme und eine Liste der Kategorien, die im Rahmen des Dienstes zum Bereitstellen von Medieninhalt an den Endnutzer verwendet werden, enthält.

6. System gemäß Anspruch 1, wobei die Dienst-Metadatendatei (105) Informationsparameter zum Auswählen von Programmen durch den Rundsendebetreiber für deren erzwungene Aufzeichnung durch die Client-Vorrichtung (103) enthält.

7. System gemäß Anspruch 6, wobei die
Informationsparameter zum Auswählen von Programmen durch den Rundsendebetreiber für deren erzwungene Aufzeichnung durch die Client-Vorrichtung (103) als Ergebnis der Analyse des Konsums von Medieninhalt des Nutzers gebildet werden.

8. System gemäß Anspruch 1, wobei die Übertragung des Transportstroms (104) vom Elektronischer-Programmführer-Server (101) an die Client-Vorrichtung (103) durch Satellitenrundsenden erreicht wird.

9. System gemäß Anspruch 1, wobei die Client-Vorrichtung (103) eine digitale Set-Top-Box STB und/oder eine Rechenvorrichtung ist.

10. System gemäß Anspruch 1, wobei der Elektronischer-Programmführer-Server (101) ein EPG-Server ist.

11. Verfahren zum Bereitstellen von Medieninhalt an einen Endnutzer ohne einen Feedbackkanal des Nutzers, aufweisend die nacheinander ausgeführten folgenden Schritte:
- Bilden einer Dienst-Metadatendatei (105), aufweisend einen vordefinierten Satz von Informationsparametern aufweisend mindestens eine Version der Dienst-Metadatendatei (105), auf einem Elektronischer-Programmführer-Server (101) der Sendeseite, und Senden der Dienst-Metadatendatei (105) an den Eingang eines Multiplexers (102);
- Bilden eines Transportstroms (104) ohne Feedbackkanal des Nutzers mit Hilfe des Multiplexers durch Einbauen in den Medieninhalttransportstrom (104), der von dem Rundsendebetreiber zum Eingang kommt, von TV-Programm-Metadaten, der Dienst-Metadatendatei (105) und zusätzlicher Dienstinformation, die ein Verknüpfungsdeskriptor in der Netzwerkinformationstabelle NIT ist, die eine dynamische Detektion der Dienst-Metadatendatei (105) im Transportstrom (104) durch die Client-Vorrichtung (103) bereitstellt,
wobei der Verknüpfungsdeskriptor ferner Rundsendeparameter SNT der Dienst-Metadatendatei (105), einen Identifikator des Medieninhaltbereitstellungsdienstes und Informationen über die Version eines Dienst-Metadatenformats aufweist,
und Senden des gebildeten Transportstroms (104) ohne Feedbackkanal des Nutzers zum Eingang der Client-Vorrichtung (103);
- Empfangen des Transportstroms (104) ohne Feedbackkanal des Nutzers auf der Client-Vorrichtung (103), die mit mindestens einem Tuner bereitgestellt ist, der mit einem Satellitenantennenkonverter verbunden ist, und Verarbeiten des Transportstroms (104), wobei währenddessen mindestens Folgendes durchgeführt wird:
- Detektieren (301) der Dienst-Metadatendatei (105) in dem Transportstrom mittels eines Verknüpfungsdeskriptors;
wobei das Verfahren bei dem Schritt des Detektierens der Dienst-Metadatendatei (105) im Transportstrom (104) zusätzlich aufweist:
- Überprüfen des Vorhandenseins (303) einer im Speicher der Client-Vorrichtung gespeicherten Version der Dienst-Metadatendatei (105);
- im Falle des Vorhandenseins einer im Speicher der Client-Vorrichtung gespeicherten Version der Dienst-Metadatendatei (105) Vergleichen (304) der Version der detektierten Dienst-Metadatendatei (105) mit der früher gespeicherten Version; und
- Verarbeiten (305) der Dienst-Metadatendatei (105), deren Version höher als die früher gespeicherte Version ist, oder der aktuell gefundenen Dienst-Metadatendatei, wenn der Speicher der Client-Vorrichtung keine Version der Dienst-Metadatendatei (105) enthält; und
- Speichern (308) des Dienstmedieninhalts auf der Speichervorrichtung der Client-Vorrichtung (103) auf der Grundlage der gespeicherten Dienst-Metadatendatei (105) und Verschlüsselung davon durch einen personalisierten Hardwareschlüssel einer bestimmten Client-Vorrichtung (103).

12. Verfahren gemäß Anspruch 11, ferner aufweisend das Anzeigen durch das Benutzerschnittstellenmodul an den Endnutzer in geeigneten Kategorien einer Liste gespeicherter Medieninhalte mit der Möglichkeit der weiteren Entschlüsselung und Betrachtung davon.

13. Verfahren gemäß Anspruch 11, wobei die Dienst-Metadatendatei (105) in den Transportstrom (104) eingebaut wird, wobei der Transportstrom (104) ein MPEG-2-Transportstrom und/oder ein MPEG-4-Transportstrom ist.

14. Verfahren gemäß Anspruch 11, wobei die Übertragung der Dienst-Metadatendatei (105) mit Hilfe des Datenkarussellverfahrens durchgeführt wird.

15. Verfahren gemäß Anspruch 11, wobei das Speichern des Dienstmedieninhalts auf der Grundlage des Bildens und Speicherns von Timern für die Kanalaufzeichnung im Speicher der Client-Vorrichtung erfolgt.

16. Verfahren gemäß Anspruch 15, wobei die Timer für die Kanalaufzeichnung für die Kanäle gebildet werden, deren SNT-Parameter sowohl in einem Satz von Kanälen des Rundsendebetreibers im Speicher der Client-Vorrichtung als auch in der verarbeiteten Dienst-Metadatendatei (105) vorhanden sind.

17. Verfahren gemäß Anspruch 15, wobei die Timer für die Kanalaufzeichnung gebildet werden für die Kanäle, deren SNT-Parameter sowohl in einem Satz von Kanälen des Rundsendebetreibers im Speicher der Client-Vorrichtung als auch in der verarbeiteten Dienst-Metadatendatei (105) vorhanden sind, sowie für Kanäle, die nicht in der Liste von Kanälen für den Benutzer angezeigt werden, aber im Speicher der Client-Vorrichtung als Ergebnis einer Suche nach Kanälen des Rundsendebetreibers gespeichert sind, wobei die Einstellungen zum Anzeigen von Kanälen in der Liste auf der Sendeseite durch VSF-Parameter im LCN bestimmt werden.

18. Verfahren gemäß irgendeinem der Ansprüche 15-17, wobei eine Überprüfung von SNT-Kanalparametern und einer Anfangszeit für jedes in der Dienst-Metadatendatei (105) spezifizierte TV-Programm durchgeführt wird und ein Timer für die Kanalaufzeichnung für Programme gespeichert wird, deren Anfangszeit in der Dienst-Metadatendatei (105) kleiner als die genaue Zeit der Client-Vorrichtung (103) ist.

19. Verfahren gemäß Anspruch 18, wobei während des Verarbeitens einer neuen Version der Dienst-Metadatendatei (105) eine neue Liste von Timern für die Aufzeichnung gebildet wird, während die vorherige Liste gelöscht wird.

20. Verfahren gemäß irgendeinem der Ansprüche 15-17, 19, wobei die Informationen über die Version der Dienst-Metadatendatei (105) beim Abschalten der Client-Vorrichtung (103) und/oder bei der erneuten Suche nach Betreiberkanälen gelöscht werden.

21. Verfahren gemäß irgendeinem der Ansprüche 15-17, 19, wobei ein Aufzeichnen von Programmen von Kanälen, die nicht in der Kanalliste für den Benutzer angezeigt werden, aber im Speicher der Client-Vorrichtung als Ergebnis der Suche nach Betreiberkanälen gespeichert werden, während des Speicherns von Dienstmedieninhalten durchgeführt wird.

22. Verfahren gemäß Anspruch 21, wobei die Einstellungen für das Anzeigen von Kanälen in der Liste gespeicherter Medieninhalte auf der Sendeseite durch VSF-Parameter im LCN bestimmt werden.

23. Verfahren gemäß Anspruch 11, wobei die Dienst-Metadatendatei (105) als eine Datei im JSON-Format gebildet wird und zusätzlich Informationen über TV-Programme und eine Liste von Kategorien, die im Rahmen des Dienstes des Bereitstellens von Medieninhalt an den Endnutzer verwendet werden, in der Dienst-Metadatendatei (105) enthalten sind.

24. Verfahren gemäß Anspruch 11, wobei Informationsparameter zum Auswählen der Programme durch den Rundsendebetreiber für deren erzwungene Aufzeichnung durch die Client-Vorrichtung (103) in der Dienst-Metadatendatei (105) enthalten sind.

25. Verfahren gemäß Anspruch 24, wobei eine Auswahl von Informationsparametern für die Auswahl der Programme durch den Rundsendebetreiber für deren erzwungene Aufzeichnung durch die Client-Vorrichtung (103) als Ergebnis einer Analyse des Medieninhaltkonsums durch den Nutzer durchgeführt wird.

26. Verfahren gemäß Anspruch 11, wobei die Übertragung des Transportstroms (104) vom EPG-Server (101) zu der Client-Vorrichtung (103) durch Satellitenrundsenden erfolgt.

27. Verfahren gemäß Anspruch 11, wobei eine Digitales-TV-Zubehör-STB und/oder eine Rechenvorrichtung als Client-Vorrichtung (103) verwendet wird.

## Revendications

1. Système de service de fourniture de contenu média à un utilisateur final sans canal de retour d'un utilisateur, comprenant :
- un serveur de guide de programmes électronique (101) est configuré avec la possibilité de créer un fichier de métadonnées de service (105) formant une sélection de métadonnées de programmes de télévision de service, comprenant un ensemble prédéfini de paramètres d'information incluant au moins une version de fichier de métadonnées, et d'envoyer ledit fichier de métadonnées de service (105) à l'entrée d'un multiplexeur (102) ;
- un multiplexeur (102) est configuré avec la possibilité de créer un flux de transport (104) et une transmission unidirectionnelle du flux de transport (104) à l'entrée d'un dispositif client (103) ;
- ledit flux de transport (104) étant créé à partir dudit fichier de métadonnées de service (105) et du contenu média arrivant à l'entrée du multiplexeur (102) à partir d'un opérateur de radiodiffusion, ainsi que d'informations de service supplémentaires qui sont un descripteur de liaison qui fournit une détection dynamique par le dispositif client (103) dudit fichier de métadonnées de service (105) dans le flux de transport (104) ;
dans lequel le descripteur de liaison comprend en outre des paramètres de radiodiffusion SNT du fichier de métadonnées de service (105), un identifiant du service de fourniture de contenu média et des informations sur la version d'un format de métadonnées de service ;
- un dispositif client (103) pourvu d'au moins un accordeur connecté à un convertisseur d'antenne satellite, d'un module d'interface utilisateur et d'un module de traitement de données,
dans lequel le module de traitement de données du dispositif client (103) est configuré avec la possibilité de :
- détection (301) du fichier de métadonnées de service (105) dans le flux de transport (104) ;
- comparaison (304) de la version du fichier de métadonnées de service détecté (105) avec la version précédemment enregistrée dans la mémoire, si la mémoire du dispositif client (103) contient une version enregistrée du fichier de métadonnées de service (105), et traitement (305) du fichier de métadonnées de service (105) dont la version est supérieure à la version précédemment enregistrée ;
- traitement (305) du fichier de métadonnées de service détecté (105) et sa sauvegarde dans la mémoire du dispositif client (103), si la mémoire du dispositif client (103) ne contient pas de version sauvegardée du fichier de métadonnées de service (105) ;
- affichage par le module d'interface utilisateur pour l'utilisateur final, dans les catégories appropriées, d'une liste de contenus média enregistrés avec la possibilité de les décrypter en outre et de les visualiser ;
dans lequel le dispositif client (103) est en outre mis en œuvre de manière logiciel-matériel et configuré avec la possibilité de recevoir le flux de transport (104) sans canal de retour d'utilisateur et pour traiter le flux de transport (104), le traitement comprenant la détection, via le descripteur de liaison, dudit fichier de métadonnées de service (105) dans le flux de transport (104), et
l'enregistrement (308) de contenu média sur la base du fichier de métadonnées de service enregistré (105) et son cryptage par la clé matérielle personnalisée d'un dispositif client particulier (103).

2. Système selon la revendication 1, dans lequel ledit flux de transport (104) est un flux de transport MPEG-2 et/ou un flux de transport MPEG-4.

3. Système selon la revendication 1, dans lequel la sauvegarde de contenu média est effectuée sur la base de la formation et de la sauvegarde de minuteries pour l'enregistrement de chaînes dans la mémoire du dispositif client.

4. Système selon la revendication 3, dans lequel les minuteries pour l'enregistrement de chaînes sont formées pour les chaînes dont les paramètres SNT sont présents à la fois dans un ensemble de chaînes de l'opérateur de radiodiffusion dans la mémoire du dispositif client et dans le fichier de métadonnées de service (105) en cours de traitement.

5. Système selon la revendication 1, dans lequel le fichier de métadonnées de service (105) est un fichier au format JSON, et contient en outre des informations sur des programmes de télévision, une liste de catégories utilisées dans le service de fourniture de contenu média à l'utilisateur final.

6. Système selon la revendication 1, dans lequel ledit fichier de métadonnées de service (105) comprend des paramètres d'information de sélection par l'opérateur de radiodiffusion de programmes pour leur enregistrement forcé par le dispositif client (103).

7. Système selon la revendication 6, dans lequel lesdits paramètres d'information de la sélection par l'opérateur de radiodiffusion de programmes pour leur enregistrement forcé par le dispositif client (103) sont formés à la suite de l'analyse de la consommation de contenu média par l'utilisateur.

8. Système selon la revendication 1, dans lequel la transmission du flux de transport (104) du serveur de guide de programmes électronique (101) au dispositif client (103) est réalisée par la radiodiffusion satellite.

9. Système selon la revendication 1, dans lequel ledit dispositif client (103) est un décodeur numérique STB et/ou un dispositif informatique.

10. Système selon la revendication 1, dans lequel ledit serveur de guide de programmes électronique (101) est un serveur EPG.

11. Procédé de fourniture de contenu média à un utilisateur final sans canal de retour de l'utilisateur, comprenant les étapes séquentielles suivantes :
- former un fichier de métadonnées de service (105), comprenant un ensemble prédéfini de paramètres d'information incluant au moins une version du fichier de métadonnées de service (105), sur un serveur de guide de programmes électronique (101) du côté de la transmission, et envoyer ledit fichier de métadonnées de service (105) à l'entrée d'un multiplexeur (102) ;
- former un flux de transport (104) sans canal de retour de l'utilisateur à l'aide du multiplexeur en intégrant dans le flux de transport de contenu média (104), arrivant à l'entrée en provenance de l'opérateur de radiodiffusion, des métadonnées de programme de télévision, un fichier de métadonnées de service (105) et une information de service supplémentaire qui est un descripteur de liaison dans le tableau d'informations de réseau NIT fournissant une détection dynamique par le dispositif client (103) dudit fichier de métadonnées de service (105) dans le flux de transport (104),
dans lequel le descripteur de liaison comprend en outre des paramètres de radiodiffusion SNT du fichier de métadonnées de service (105), un identifiant du service de fourniture de contenu média et des informations sur la version d'un format de métadonnées de service ;
et envoyer le flux de transport formé (104) sans canal de retour de l'utilisateur à l'entrée du dispositif client (103) ;
- recevoir le flux de transport (104) sans canal de retour de l'utilisateur sur le dispositif client (103) pourvu d'au moins un accordeur connecté à un convertisseur d'antenne satellite, et traiter le flux de transport (104) en effectuant au moins les opérations suivantes :
- détecter (301) le fichier de métadonnées de service (105) dans le flux de transport au moyen du descripteur de liaison ;
dans lequel, à l'étape de détection du fichier de métadonnées de service (105) dans le flux de transport (104), le procédé comprend en outre les opérations suivantes :
- vérifier la présence (303) d'une version du fichier de métadonnées de service (105) enregistrée dans la mémoire du dispositif client ;
- en cas de présence d'une version du fichier de métadonnées de service (105) enregistrée dans la mémoire du dispositif client, comparer (304) la version du fichier de métadonnées de service détecté (105) avec la version enregistrée antérieurement, et
- traiter (305) le fichier de métadonnées de service (105) dont la version est supérieure à la version enregistrée antérieurement, ou le fichier de métadonnées de service actuellement trouvé, si la mémoire du dispositif client ne contient pas de version du fichier de métadonnées de service (105) ; et
- sauvegarder (308) le contenu média de service sur le dispositif de stockage du dispositif client (103) sur la base du fichier de métadonnées de service enregistré (105), et le crypter à l'aide de la clé matérielle personnalisée du dispositif client particulier (103).

12. Procédé selon la revendication 11, comprenant en outre l'affichage, par le module d'interface utilisateur pour l'utilisateur final, dans des catégories appropriées, d'une liste de contenus média enregistrés avec la possibilité de les décrypter en outre et de les visualiser.

13. Procédé selon la revendication 11, dans lequel le fichier de métadonnées de service (105) est intégré dans le flux de transport (104), ledit flux de transport (104) étant un flux de transport MPEG-2 et/ou un flux de transport MPEG-4.

14. Procédé selon la revendication 11, dans lequel la transmission du fichier de métadonnées de service (105) est effectuée par une méthode de carrousel de données.

15. Procédé selon la revendication 11, dans lequel la sauvegarde du contenu média de service est effectuée sur la base de la formation et de la sauvegarde de minuteries pour l'enregistrement de chaînes dans la mémoire du dispositif client.

16. Procédé selon la revendication 15, dans lequel lesdites minuteries pour l'enregistrement de chaînes sont formées pour les chaînes dont les paramètres SNT sont présents à la fois dans un ensemble de chaînes de l'opérateur de radiodiffusion dans la mémoire du dispositif client et dans le fichier de métadonnées de service (105) en cours de traitement.

17. Procédé selon la revendication 15, dans lequel lesdites minuteries pour l'enregistrement de chaînes sont formées pour les chaînes dont les paramètres SNT sont présents à la fois dans un ensemble de chaînes de l'opérateur de radiodiffusion dans la mémoire du dispositif client et dans le fichier de métadonnées de service (105) en cours de traitement, ainsi que pour des chaînes qui ne sont pas affichées dans la liste de chaînes pour l'utilisateur, mais sauvegardées dans la mémoire du dispositif client à la suite d'une recherche de chaînes de l'opérateur de radiodiffusion, les réglages pour l'affichage de chaînes dans la liste étant déterminés du côté de transmission par le paramètre VSF dans le LCN.

18. Procédé selon l'une quelconque des revendications 15 à 17, dans lequel une vérification de paramètres de chaîne SNT et de l'heure de début de chaque programme de télévision spécifié dans le fichier de métadonnées de service (105) est effectuée, et une minuterie d'enregistrement de chaîne est sauvegardée pour des programmes dont l'heure de début dans le fichier de métadonnées de service (105) est inférieure à l'heure exacte du dispositif client (103).

19. Procédé selon la revendication 18, dans lequel, pendant le traitement d'une nouvelle version du fichier de métadonnées de service (105), une nouvelle liste de minuteries pour l'enregistrement est formée tandis que la liste précédente est supprimée.

20. Procédé selon l'une quelconque des revendications 15 à 17, 19, dans lequel les informations relatives à la version du fichier de métadonnées de service (105) sont supprimées lors de la mise hors tension du dispositif client (103) et/ou lors d'une nouvelle recherche de chaînes de l'opérateur.

21. Procédé selon l'une quelconque des revendications 15 à 17, 19, dans lequel l'enregistrement de programmes de chaînes non affichées dans la liste de chaînes pour l'utilisateur, mais sauvegardées dans la mémoire du dispositif client à la suite de la recherche de chaînes de l'opérateur, est effectué pendant la sauvegarde du contenu média de service.

22. Procédé selon la revendication 21, dans lequel les réglages pour afficher des chaînes dans la liste de contenus média enregistrés sont déterminés du côté de la transmission par le paramètre VSF dans le LCN.

23. Procédé selon la revendication 11, dans lequel le fichier de métadonnées de service (105) est formé en tant que fichier au format JSON, et en outre des informations sur les programmes de télévision et la liste de catégories utilisées dans le cadre du service de fourniture de contenu média à l'utilisateur final sont incluses dans le fichier de métadonnées de service (105).

24. Procédé selon la revendication 11, dans lequel les paramètres d'information du choix des programmes par l'opérateur de radiodiffusion pour leur enregistrement forcé par le dispositif client (103) sont inclus dans le fichier de métadonnées de service (105).

25. Procédé selon la revendication 24, dans lequel une sélection de paramètres d'information pour le choix des programmes est effectuée par l'opérateur de radiodiffusion pour leur enregistrement forcé par le dispositif client (103) à la suite d'une analyse de la consommation de contenu média par l'utilisateur.

26. Procédé selon la revendication 11, dans lequel la transmission du flux de transport (104) du serveur EPG (101) au dispositif client (103) est effectuée par radiodiffusion satellite.

27. Procédé selon la revendication 11, dans lequel un accessoire de télévision numérique STB et/ou un dispositif informatique est utilisé comme dispositif client (103).
